(19) Europäisches Patentamt / European Patent Office / Office européen des brevets

(11) **EP 4 258 213 A1**

(12) **EUROPEAN PATENT APPLICATION**

(43) Date of publication:
**11.10.2023  Bulletin 2023/41**

(21) Application number: **22167194.4**

(22) Date of filing: **07.04.2022**

(51) International Patent Classification (IPC):
***G06T 9/00*** *(2006.01)*

(52) Cooperative Patent Classification (CPC):
**G06T 9/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **LASSERRE, Sebastien**
  **Beijing, 100085 (CN)**
• **TAQUET, Jonathan**
  **Beijing, 100085 (CN)**

(74) Representative: **Zimmermann, Tankred Klaus et al**
  **Schoppe, Zimmermann, Stöckeler**
  **Zinkler, Schenk & Partner mbB**
  **Patentanwälte**
  **Radlkoferstrasse 2**
  **81373 München (DE)**

(54) **METHODS AND APPARATUS FOR ENTROPY CODING A PRESENCE FLAG FOR A POINT CLOUD AND DATA STREAM INCLUDING THE PRESENCE FLAG**

(57)    A method of encoding geometrical information of a geometry of a point cloud into a bitstream is described. The point cloud is represented by a plurality of cuboid volumes, and an occupied cuboid volume is modelled by one or more triangles. At least one triangle has at least one respective vertex on an edge of the occupied cuboid volume. The geometrical information including presence flags signaling a presence of a vertex. The method includes for a current edge: Constructing (S 100) contextual information based on one or more or all of the following: occupancy information of neighboring cuboid volumes that abut the current edge, and vertex positional information of already-coded neighboring edges of the current edge, the neighboring edges being edges having a point in common with the current edge, using (S102) the contextual information to select a coding probability of an entropy coder, and encoding (S104), by the entropy coder and using the selected coding probability, a presence flag for the current edge.

constructing contextual information — S100

↓

using the contextual information to select a coding probability of an entropy coder, and — S102

↓

encoding, by the entropy coder and using the selected coding probability, a presence flag for the current edge — S104

Fig. 7

**Description**

**TECHNICAL FIELD**

The present invention generally relates to data compression, more specifically to methods and apparatus for coding geometrical information of a geometry of a point cloud. Embodiments of the present invention concern methods and apparatus for coding presence flags signaling a presence of a vertex of a triangle on an edge of a cuboid volume representing a portion of the point cloud, and a data or bitstream having encoded therein the presence flags.

**BACKGROUND**

Data compression is used in communications and computer networking to store, transmit, and reproduce information efficiently. For example, as a format for the representation of three-dimensional (3D) data, point clouds have recently gained attraction as they are versatile in their capability in representing all types of 3D objects or scenes. Therefore, many use cases can be addressed by point clouds, among which are

- movie post-production,
- real-time 3D immersive telepresence or VR /AR (virtual reality / augmented reality) applications,
- free viewpoint video, e.g., for sports viewing,
- geographical information systems, also known as cartography,
- culture heritage, e.g., the storage of scans of rare objects into a digital form,
- autonomous driving, including 3D mapping of the environment and real-time LiDAR data acquisition (LiDAR: Light Detection And Ranging = a method for measuring distances (ranging) by illuminating the target with laser light and measuring the reflection with a sensor).

Accordingly, there is a need to provide for methods and apparatus that more efficiently and/or effectively compress data for point clouds.

**SUMMARY**

The present invention provides a method of encoding geometrical information of a geometry of a point cloud into a bitstream, the point cloud being represented by a plurality of cuboid volumes, an occupied cuboid volume being modelled by one or more triangles, at least one triangle having at least one respective vertex on an edge of the occupied cuboid volume, and the geometrical information comprising presence flags signaling a presence of a vertex the method comprising for a current edge:

constructing contextual information based on one or more or all of the following:

- occupancy information of neighboring cuboid volumes that abut the current edge,
- vertex positional information of already-coded neighboring edges of the current edge, the neighboring edges being edges having a point in common with the current edge, using the contextual information to select a coding probability of an entropy coder, and

encoding, by the entropy coder and using the selected coding probability, a presence flag for the current edge.

The present invention provides a method of decoding geometrical information of a geometry of a point cloud from a bitstream, the point cloud being represented by a plurality of cuboid volumes, an occupied cuboid volume being modelled by one or more triangles, at least one triangle having at least one respective vertex on an edge of the occupied cuboid volume, and the geometrical information comprising presence flags signaling a presence of a vertex, the method comprising for a current edge:

constructing contextual information based on one or more or all of the following:

- occupancy information of neighboring cuboid volumes that abut the current edge,
- vertex positional information of already-decoded neighboring edges of the current edge, the neighboring edges being edges having a point in common with the current edge,

using the contextual information to select a coding probability of an entropy coder, and

decoding, by the entropy coder and using the selected coding probability, a presence flag for the current edge.

Optionally, constructing the contextual information is based one or more or all of the following:

- a count of all occupied neighboring cuboid volumes belonging to a subset of neighboring cuboid volumes,
- whether or not all neighboring cuboid volumes belonging to a subset of neighboring cuboid volumes are occupied,

wherein the subset of neighboring cuboid volumes comprising one or more or all of the following:

- the neighboring cuboid volumes sharing the current edge,
- the neighboring cuboid volumes having a corner as a start point of the current edge,
- the neighboring cuboid volumes having a corner as an end point of the current edge.

Optionally, constructing the contextual information is based on one or more or all of the following:

- values of already-coded/decoded presence flags associated with the neighboring edges of the current edge,
- positions of vertices on the already-coded/decoded neighboring edges of the current edge,
- a count of vertices on already-coded/decoded neighboring edges of the current edge which have a distance from the current edge that is below a predefined threshold,
- a count of vertices on already-coded/decoded neighboring edges of the current edge which have a distance from the current edge that is within a predefined interval.

Optionally, constructing the contextual information is based

- on a number of neighboring edges for which the already-coded/decoded presence flag is true, and on a number of neighboring edges for which the already-coded/decoded presence flag is false, or
- only on the number of neighboring edges for which the already-coded/decoded presence flag is false.

Optionally, constructing the contextual information comprises quantizing the position of the vertices on the already-coded/decoded neighboring edges to be coarser than an accuracy with which the position of the vertices on the already-coded/decoded neighboring edges are coded into the bitstream.
Optionally, for selecting the coding probability of the entropy coder, the method uses

- an optimal binary coder with update on the fly, OBUF, mechanism, or
- a context-adaptive binary arithmetic coding, CABAC, mechanism.

Optionally, the point cloud is modeled using the TriSoup coding scheme.
The present invention provides a non-transitory computer-readable storage medium comprising instructions which, when executed by a computer, cause the computer to carry out the inventive method.
The present invention provides an apparatus for encoding geometrical information of a geometry of a point cloud into a bitstream, the point cloud being represented by a plurality of cuboid volumes, an occupied cuboid volume being modelled by one or more triangles, at least one triangle having at least one respective vertex on an edge of the occupied cuboid volume, and the geometrical information comprising presence flags signaling a presence of a vertex, the apparatus comprising:

a contextual information constructing module configured to construct contextual information for a current edge based on one or more or all of the following:

- occupancy information of neighboring cuboid volumes that abut the current edge,
- vertex positional information of already-coded neighboring edges of the current edge, the neighboring edges being edges having a point in common with the current edge,

a selection module configured to use the contextual information provided by the contextual information constructing module to select a coding probability of an entropy coder, and
an encoding module configured to encode, by the entropy coder and using the selected coding probability, a presence flag for the current edge.

The present invention provides an apparatus for decoding geometrical information of a geometry of a point cloud from a bitstream, the point cloud being represented by a plurality of cuboid volumes, an occupied cuboid volume being modelled by one or more triangles, at least one triangle having at least one respective vertex on an edge of the occupied cuboid volume, and the geometrical information comprising presence flags signaling a presence of a vertex, the apparatus comprising:

a contextual information constructing module configured to construct contextual information for a current edge based on one or more or all of the following:

- occupancy information of neighboring cuboid volumes that abut the current edge,
- vertex positional information of already-decoded neighboring edges of the current edge, the neighboring edges being edges having a point in common with the current edge,

a selection module configured to use the contextual information provided by the contextual information constructing module to select a coding probability of an entropy coder, and
a decoding module configured to decode, by the entropy coder and using the selected coding probability, a presence flag for the current edge.

Optionally, the contextual information constructing module comprises one or more or all of the following submodules:

- an occupancy information obtaining submodule configured to obtain occupancy information of neighboring cuboid volumes that abut the current edge,
- a vertex presence obtaining submodule configured to obtain a vertex presence on already-coded/decoded neighboring edges,
- a vertex position obtaining submodule configured to obtain a vertex position along already-coded/decoded neighboring edges.

Optionally, the vertex presence obtaining submodule is configured to obtain values of already-coded/decoded presence flag associated with the neighboring edges of the current edge.
Optionally, the vertex position obtaining submodule is configured to obtain one or more or all of the following:

- positions of vertices on the already-coded/decoded neighboring edges of the current edge,
- a count of vertices on already-coded/decoded neighboring edges of the current edge which have a distance from the current edge that is below a predefined threshold,
- a count of vertices on already-coded/decoded neighboring edges of the current edge which have a distance from the current edge that is within a predefined interval.

The present invention provides a data stream having encoded thereinto geometrical information of a geometry of a point cloud, the point cloud being represented by a plurality of cuboid volumes, an occupied cuboid volume being modelled by one or more triangles, at least one triangle having at least one respective vertex on an edge of the occupied cuboid volume, and the geometrical information comprising presence flags signaling a presence of a vertex, the data stream comprising for a current edge:

a presence flag for the current edge encoded into the data stream by an entropy coder and using a coding probability, the coding probability selected using contextual information,
wherein the contextual information is constructed based on one or more or all of the following:

- occupancy information of neighboring cuboid volumes that abut the current edge,
- vertex positional information of already-encoded neighboring edges of the current edge, the neighboring edges being edges having a point in common with the current edge.

The technical solutions provided according to embodiments of the present invention have the following beneficial effects.
While in the prior art a compression of TriSoup data is not very efficient, embodiments of the present invention provide for an improved compression of the vertex flag or presence flag that indicates the presence of a TriSoup vertex on an edge of an occupied leaf node/volume. In the prior art, the vertex flag is compressed using a binary entropy coder with one dedicated fixed context leading, in turn, to a poor compression. The present invention introduces the use of better contextual information to select a context or an entropy coder (as done by applying, e.g., an optimal binary coder with update on the fly, so-called OBUF, mechanism) and leads to a better estimation of the probability of the vertex or presence flag to be false (0) or true (1), which, in turn, leads to a better compression of the flag by the entropy coder. Embodiments of the present invention obtain relevant contextual information correlated with the of the value of the vertex flag.

It should be understood that the content described in this section is not intended to identify key or critical features of embodiments of the present invention, nor is intended to limit the scope of the present invention. Other features of the present invention will become readily appreciated from the following descriptions.

**BRIEF DESCRIPTION OF THE DRAWINGS**

The drawings are explanatory and serve to explain the present invention, and are not construed to limit the present invention to the illustrated embodiments.

Fig. 1 illustrates TriSoup vertices along edges of a volume associated with a leaf node of an octree representation of a point cloud geometry;

Fig. 2 illustrates a volume including two TriSoup triangles having their respective vertices on the edges of the volume;

Fig. 3 illustrates a volume including TriSoup triangles two of their vertices on the edges of the volume and one of their vertices inside the volume;

Fig. 4 illustrates a process for choosing triangles to be constructed inside a leaf node, wherein Fig. 4(a) illustrates the volume of Fig. 2 without triangles, Fig. 4(b) illustrates a 2D surface of the triangles using a vertical projection of the volume, and Fig. 4(c) illustrates a 2D surface of the triangles using a vertical horizontal projection of the volume;

Fig. 5 illustrates the volume of Fig. 2 with two TriSoup triangles constructed under the assumption of the horizontal axis being the dominant axis;

Fig. 6 illustrates the ray tracing to render a TriSoup triangle as a decoded point cloud;

Fig. 7 illustrates a flow diagram of a method of encoding geometrical information of a geometry of a point cloud into a bitstream in accordance with embodiments of the present invention;

Fig. 8 illustrates a flow diagram of a method of decoding geometrical information of a geometry of a point cloud from a bitstream in accordance with embodiments of the present invention;

Fig. 9 illustrates a data stream in accordance with embodiments of the present invention;

Fig. 10 illustrates a flow diagram of an encoding method in accordance with embodiments of the present invention;

Fig. 11 illustrates a flow diagram of a decoding method in accordance with embodiments of the present invention;

Fig. 12 illustrates the 4 leaf nodes/volumes sharing a current edge k (illustrated by an arrow);

Fig. 13 illustrates the 8 leaf nodes/volumes whose one corner is either the start or the end point of the current edge k (illustrated by an arrow);

Fig. 14 illustrates the unique edge k' (illustrated by a dashed arrow) parallel to the current edge k (illustrated by an arrow) and pointing to its start point;

Fig. 15 illustrates the 4 perpendicular edges k' (illustrated by dashed arrows) orthogonal to the current edge k (illustrated by an arrow) and pointing to or starting from its start point;

Fig. 16 illustrates the number $N_{perp}(k)$ of already-coded/decoded perpendicular edges k' dependent on the direction of the current edge k;

Fig. 17 illustrates an already-coded/decoded TriSoup vertex $V_{par}$ and its quantized position $p_{par,Q}$ on an already-coded/decoded unique edge k';

Fig. 18 illustrates the position "near" vs. "far" of vertices belonging to a perpendicular already-coded/decoded edge k';

Fig. 19 illustrates the position "near" vs. "mid" vs. "far" of vertices belonging to a perpendicular already-coded/decoded edge k';

Fig. 20 illustrates a block diagram of an apparatus/encoder for encoding a vertex flag $s_k$ in accordance with embodiments;

Fig. 21 illustrates a block diagram of an apparatus/decoder for decoding a vertex flag $s_k$ in accordance with embodiments;

Fig. 22 illustrates a block diagram of an embodiment for implementing the contextual information constructing module as it may be used in the encoder of Fig. 20 or the decoder of Fig. 21; and

Fig. 23 illustrates a block diagram illustrating an electronic device configured to implement an image processing method according to embodiments of the present disclosure.

**DETAILED DESCRIPTION**

Illustrative embodiments of the present invention are described below with reference to the drawings, where various details of the embodiments of the present invention are included to facilitate understanding and should be considered as illustrative only. Accordingly, those of ordinary skill in the art will recognize that various changes and modifications of the embodiments described herein can be made without departing from the scope of the present invention. Also, descriptions of well-known functions and constructions are omitted from the following description for clarity and conciseness.

In the present invention, the terms "node", "volume" and "sub-volume" may be used interchangeably. It will be appreciated that a node is associated with a volume or sub-volume. The node is a particular point on the tree that may be an internal node or a leaf node. The volume or sub-volume is the bounded physical space that the node represents. The term "volume" may, in some cases, be used to refer to the largest bounded space defined for containing the point cloud. A volume may be recursively divided into sub-volumes for the purpose of building out a tree-structure of interconnected nodes for coding the point cloud data.

In the present invention, the term "and/or" is intended to cover all possible combinations and sub-combinations of the listed elements, including any one of the listed elements alone, any sub-combination, or all of the elements, and without necessarily excluding additional elements.

In the present invention, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present invention, the term "coding" refers to "encoding" or to "decoding" as becomes apparent from the context of the described embodiments concerning the coding of the geometrical information into/from a bitstream. Likewise, the term "coder" refers to "an encoder" or to "a decoder".

A point cloud is a set of points in a three-dimensional coordinate system. The points are often intended to represent an external surface of one or more objects. Each point has a location or position in the three-dimensional coordinate system. The position may be represented by three coordinates (X, Y, Z), which can be Cartesian or any other coordinate system. The points may have other associated attributes, such as color, which may also be a three-component value in some cases, such as R, G, B or Y, Cb, Cr. Other associated attributes may include transparency, reflectance, a normal vector, etc., depending on the desired application for the point cloud data.

Point clouds can be static or dynamic. For example, a detailed scan or mapping of an object or topography may be static point cloud data. The LiDAR-based scanning of an environment for machine-vision purposes may be dynamic in that the point cloud, at least potentially, changes over time, e.g., with each successive scan of a volume. The dynamic point cloud is therefore a time-ordered sequence of point clouds.

As mentioned above, point cloud data may be used in a number of applications or use cases, including conservation, like scanning of historical or cultural objects, mapping, machine vision, e.g., for autonomous or semi-autonomous cars, and virtual or augmented reality systems. Dynamic point cloud data for applications, like machine vision, can be quite different from static point cloud data, like that for conservation purposes. Automotive vision, for example, typically involves relatively small resolution, non-colored, highly dynamic point clouds obtained through LiDAR or similar sensors with a high frequency of capture. The objective of such point clouds is not for human consumption or viewing but rather for machine object detection/classification in a decision process. As an example, typical LiDAR frames contain in the order of tens of thousands of points, whereas high quality virtual reality applications require several millions of points. It may be expected that there is a demand for higher resolution data over time as computational speed increases and new applications or use cases are found.

Stated differently, a point cloud is a set of points located in a 3D space, optionally with additional values attached to each of the points. These additional values are usually called point attributes. Consequently, a point cloud may be considered a combination of a geometry (the 3D position of each point) and attributes. Attributes may be, for example, three-component colours, material properties, like reflectance, and/or two-component normal vectors to a surface associated with the point. Point clouds may be captured by various types of devices like an array of cameras, depth sensors, the mentioned LiDARs, scanners, or they may be computer-generated, e.g., in movie post-production use cases. Depending on the use cases, points clouds may have from thousands to up to billions of points for cartography applications.

Raw representations of point clouds require a very high number of bits per point, with at least a dozen of bits per spatial component X, Y or Z, and optionally more bits for the one or more attributes, for instance three times 10 bits for the colours. Therefore, a practical deployment of point-cloud-based applications or use cases requires compression technologies that enable the storage and distribution of point clouds with reasonable storage and transmission infrastructures. In other words, while point cloud data is useful, a lack of effective and efficient compression, i.e., encoding and decoding processes, may hamper adoption and deployment. A particular challenge in coding point clouds that does not arise in the case of other data compression, like audio or video, is the coding of the geometry of the point cloud, and the tendency of point clouds to be sparsely populated makes efficiently coding the location of the points much more challenging.

Until recently, point cloud compression, also referred to as PCC, was not addressed by the mass market and there was no standardized point cloud codec available. In 2017, the standardization working group ISO/JCT1/SC29/WG11, also known as Moving Picture Experts Group or MPEG, initiated work items on point cloud compression which have led to two standards, namely:

- MPEG-I Part 5 (ISO/IEC 23090-5) also referred to as Video-based Point Cloud Compression, V-PCC,
- MPEG-I Part 9 (ISO/IEC 23090-9) also referred to as Geometry-based Point Cloud Compression, G-PCC.

The first versions of the V-PCC standard and the G-PCC standard were finalized respectively in 2020 and 2022.

The V-PCC coding method compresses a point cloud by performing multiple projections of a 3D object to obtain two-dimensional (2D) patches that are packed into an image or into a video when dealing with moving point clouds. The images or videos are then compressed using existing image/video codecs, allowing for the leverage of already deployed image and video solutions. By its very nature, V-PCC is efficient only on dense and continuous point clouds because image/video codecs are unable to compress non-smooth patches in case they are obtained from the projection of, for example, LiDAR acquired sparse geometry data.

The G-PCC coding method has two schemes for the compression of the geometry.

- The first scheme is based on an occupancy tree representation of the point cloud geometry, for example, by means of an octree representation, a quad tree representation or a binary tree representation. In a tree-based structure, the bounding three-dimensional volume for the point cloud is recursively divided into sub-volumes. Nodes of the tree correspond to sub-volumes. The decision of whether or not to further divide a sub-volume may be based on a resolution of the tree and/or whether there are any points contained in the sub-volume. A leaf node may have an occupancy flag that indicates whether its associated sub-volume contains a point or not. Splitting flags may signal whether a node has child nodes, i.e., whether a current volume has been further split into sub-volumes. A commonly used tree structure is an octree. In this structure, the volumes/sub-volumes are all cuboids and each split of a sub-volume results in eight further sub-volumes/sub-cuboids. Another commonly used tree structure is a KD-tree, in which a volume, like a cuboid, is recursively divided in two by a plane orthogonal to one of the axes. Octrees are a special case of KD-trees, where the volume is divided by three planes, each being orthogonal to one of the three axes. In other words, occupied nodes are split down until a certain size is reached, and occupied leaf modes provide the location of points, typically at the center of these nodes. By using neighbor-based prediction techniques, a high level of compression may be obtained for dense point clouds. Sparse point clouds are also addressed by directly coding the position of a point within a node with a non-minimal size, by stopping the tree construction when only isolated points are present in a node. This stopping technique is also referred to as a direct coding mode (DCM).
- The second scheme is based on a predictive tree, in which each node represents the 3D location of one point and the relation between nodes is a spatial prediction from the parent node to the child nodes. This method may only address sparse point clouds and offers the advantage of a lower latency and a simpler decoding when compared to using an occupancy tree. However, the compression performance is slightly better while, when compared to the first scheme, the encoding is complex due to the need to intensively look for a best predictor among a long list of potential predictors when constructing the predictive tree.

In both schemes attribute coding, i.e., attribute encoding and attribute decoding, is performed after coding the complete geometry which, in turn, leads to a two-pass coding process. A low latency may be obtained by using slices that decompose the 3D space into sub-volumes that are coded independently, without prediction between the sub-volumes. However, this may heavily impact the compression performance when many slices are used.

One use case of specific interest is the transmission of dynamic AR/VR point clouds, wherein dynamic means that the point cloud evolves over time. Also, AR/VR point clouds are typically locally 2D as, most of the time, they represent the surface of an object. As such, AR/VR point clouds are highly connected, also referred to as being dense, in the sense that a point is rarely isolated and, instead, has many neighbors. Thus, dense or solid point clouds represent continuous surfaces with a resolution such that volumes, also referred to as small cubes or voxels, associated with points touch each other without exhibiting any visual hole in the surface. Such point clouds, as mentioned above, are typically used in AR/VR environments and may be viewed by an end user through a device, like a TV, a smart phone or a headset including AR/VR glasses. The point clouds may be transmitted to the device or may be stored locally. Many AR/VR applications make use of moving point clouds which, as opposed to static point clouds, vary with time. Therefore, the volume of data may be huge and needs to be compressed. For example, when applying the above-mentioned octree representation of the geometry of a point cloud, a lossless compression may be achieved down to slightly less than 1 bit per point (or 1 bpp). However, this may not be sufficient for real time transmissions that may involve several millions of points per frame with a frame rate as high as 50 frames per second leading, in turn, to hundreds of megabytes of data per second.

Consequently, a lossy compression scheme may be used with the usual requirement of maintaining an acceptable visual quality by providing for a compression that is sufficient to fit the compressed data within a bandwidth available in the transmission channel while, at the same time, maintaining a real time transmission of the frames. In many applications, bit rates as low as 0.1 bpp may already allow for a real time transmission, meaning that by means of the lossy compression the point cloud is compressed ten times more than when applying a lossless coding scheme.

The codec based on MPEG-I part 5 (ISO/IEC 23090-5) or V-PCC may achieve such low bitrates by using the lossy compression of video codecs that compress 2D frames obtained from the projection of the point cloud on the planes. The geometry is represented by a series of projection patches assembled into a frame with each patch being a small local depth map. However, V-PCC is not versatile and is limited to a narrow type of point clouds that do not exhibit a locally complex geometry, like trees or hair or the like, because the obtained projected depth map may not be smooth enough to be efficiently compressed by video codecs.

On the other hand, pure 3D compression techniques may handle any type of point clouds. For example, G-PCC may provide in the future a lossy compression that also allows compressing dense point clouds as good as V-PCC intra while maintaining the versatility of G-PCC so as to handle any type of point clouds, like dense point clouds, point clouds obtained by LiDAR or point clouds representing 3D maps. For implementing such a G-PCC mechanism, the so-called TriSoup coding scheme may be applied over a first layer based on an octree. Currently, the TriSoup coding scheme is discussed in the standardization working group JTC1/SC29/WG7 of ISO/IEC. When considering the possibilities for obtaining a lossy scheme from G-PCC, there are basically three approaches for obtaining a lossy scheme over the octree representation as used by the 3-PCC codec, namely

- down-sampling + (lossless) coding + re-up-sampling
- modifying the voxels locally on the encoder side
- modelling the point cloud locally.

The first approach basically comprises down-sampling the entire point cloud to a smaller resolution, lossless coding of the down-sampled point cloud, and then up-sampling after decoding. There are many up-sampling schemes, e.g., super resolution, artificial intelligence, AI or learning-based 3D post-processing and the like, which may provide for good peak signal-to-noise ratio, PSNR, results when the down-sampling is not too aggressive, for example not more than a factor of two in each direction. However, even if the metrics show a good PSNR, the visual quality is still disputable and not well controlled.

The second approach allows the encoder to adjust the point cloud locally such that the coding of the octree requires a lesser bitrate. For this purpose, the points may be slightly moved so as to obtain occupancy information that may be better predicted by neighboring nodes, thereby leading to a lossless encoding of a modified octree with a lower bitrate. However, this approach, unfortunately, only leads to a small bitrate reduction.

The third approach is to code the geometry using a tree, like an octree, down to a certain resolution, for example down to NxNxN blocks, where N may be 4, 8 or 16, for example. This tree is then coded using a lossless scheme, like the G-PCC scheme. The tree itself does not require a high bitrate because it does not go down to the deepest depth and has only a small number of leaf nodes when compared to the number of points in the point cloud. Then, in each NxNxN block the point cloud is modelled by a local model. Such a model may be a mean plane or a set of triangles as in the above-mentioned TriSoup coding scheme which is described now in more detail.

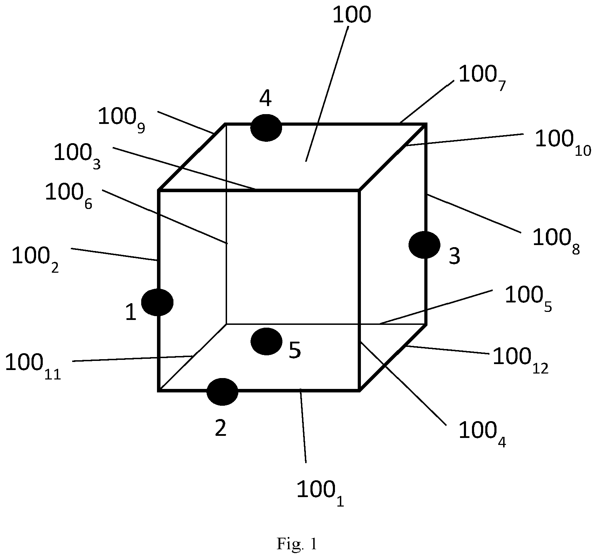

The TriSoup coding scheme models a point cloud locally by using a set of triangles without explicitly providing connectivity information - that is why its name is derived from the term "soup of triangles". As mentioned above, each NxNxN block defines a volume associated with a leaf node, and in each NxNxN block or volume the point cloud is modeled locally using a set of triangles wherein vertices of the triangles are coded along the edges of the volume associated with the leaf nodes of the tree. Fig. 1 illustrates a volume 100 associated with a leaf node which is a cuboid volume designed by twelve edges $100_1$ to $100_{12}$.

The part of the point cloud encompassed by the volume 100 is modeled by at least one triangle having at least one vertex on one of the edges $100_1$ to $100_{12}$. In the example of Fig. 1, five vertices 1 to 5 are illustrated among which vertices 1 to 4 are located on the edges $100_2$, $100_1$, $100_8$ and $100_7$, respectively. The vertex 5 is not located on any of the edges but is within the volume 100. In other words, for locally modeling the point cloud, one or more triangles are used, and the triangles may have at least one vertex that is located on an edge of the volume, like the vertices 1 to 4 while other triangles may have one or two of their vertices not located on an edge but within the volume 100, like vertex 5, or at a boundary of the volume 100.

The vertices located on the edges are shared among those leaf nodes that have a common edge which means that at most one vertex is coded per edge that belongs to at least one leaf node, and by doing so the continuity of the model is ensured through the leaf nodes. The coding of the TriSoup vertices requires two information per edge:

- a vertex flag indicating if a TriSoup vertex is present on the edge, also referred to herein as the presence flag, and
- in case the vertex is present, the vertex position along the edge.

Consequently, the coded data comprises the octree data plus the TriSoup data. For example, the vertex flag may be coded by an adaptive binary arithmetic coder that uses one specific context for coding vertex flags, while the position of the vertex on the edge having a length $N=2^s$ is coded with unitary precision by pushing s bits into the bitstream, i.e., by bypassing/not entropy coding the s bits.

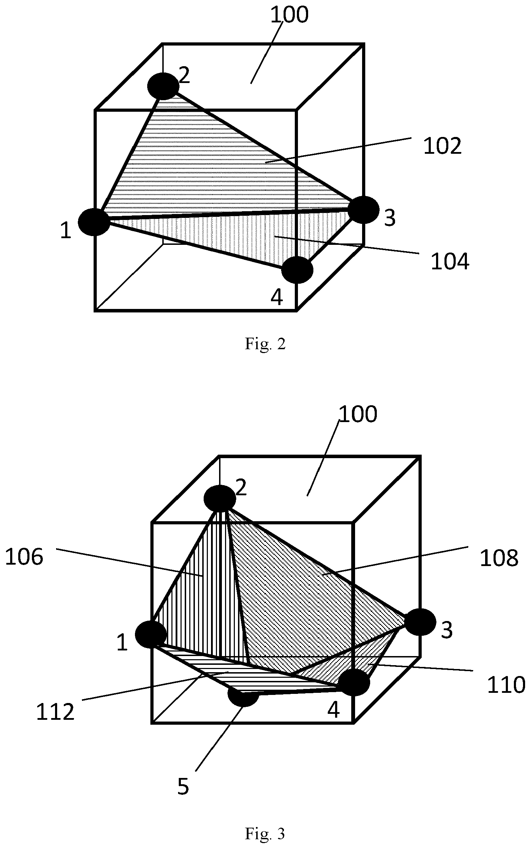

Fig. 2 illustrates a volume 100 associated with a leaf node including two TriSoup triangles 102, 104 having their respective vertices 1 to 4 on the edges (see Fig. 1) $100_2$, $100_1$, $100_8$ and $100_4$, respectively, of the volume 100. Triangle 102 comprises the vertices 1, 2 and 3, while triangle 104 comprises the vertices 1, 3 and 4. Thus, triangles may be constructed in case at least three vertices are present on the edges of the volume 100. Naturally, any other combination of triangles than those shown in Fig. 2 is possible inside the volume 100 associated with a leaf node. Also, the one or more triangles inside the volume 100 do not have necessarily all of their vertices on the edges of the volume 100, rather, one or two of the vertices of a triangle may be located anywhere inside the volume 100. Fig. 3 illustrates the volume 100 including the vertices 1 to 4 (like in Fig. 2) located on the respective edges of the volume 100 and a further vertex 5 located within the volume 100. Inside the volume 100, four triangles 106 to 112 are constructed from the TriSoup vertices 1 to 5 of which a first triangle 106 comprises the vertices 1, 2 and 5, a second triangle 108 comprises the vertices 2, 3 and 5, a third triangle 110 comprises the vertices 3, 5 and 5, and a fourth triangle 112 comprises the vertices 1, 4 and 5.

The triangles to be constructed inside the volume 100 is based on the following three-step process including:

1. Determining a dominant direction along one of the three axes.
2. Ordering the TriSoup vertices dependent on the dominant direction.
3. Constructing the triangles based on the ordered list of vertices.

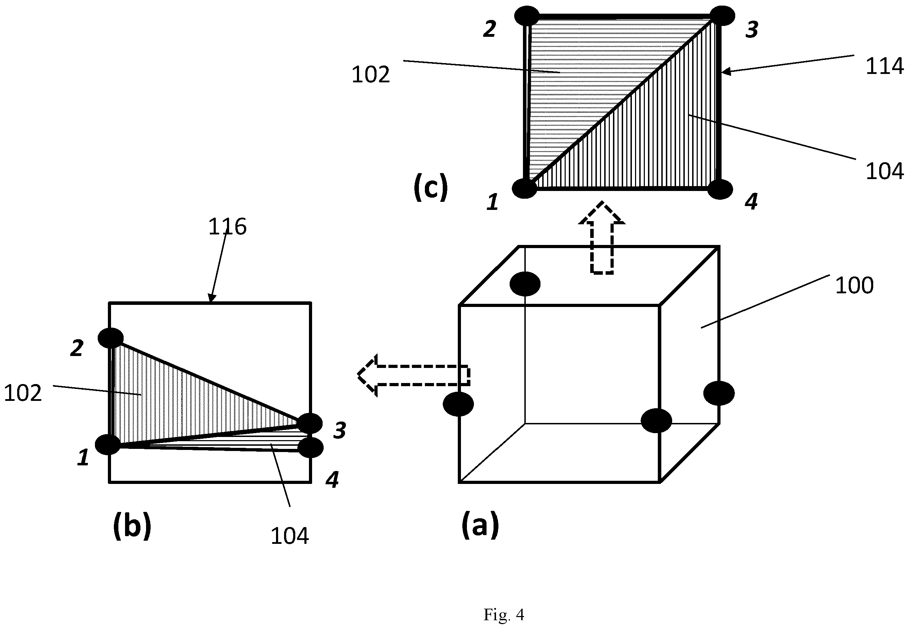

Fig. 4 illustrates the process for choosing triangles to be constructed inside the volume 100 associated with a leaf node of Fig. 2 which is illustrated again in Fig. 4(a) without the triangles. Fig. 4(b) and Fig. 4(c) illustrate the process over two axes, namely the vertical or z-axis (Fig. 4(b)) and the horizontal axis or x-axis (Fig. 4(c)).

The first test along the vertical axis, i.e., from the top, is performed by projecting the volume or cube 100 and the TriSoup vertices vertically onto a 2D plane as is illustrated in Fig. 4(c). The vertices are then ordered following a clockwise order relative to the center of the projected node 114 which, in the illustrated example, is a square. The triangles are constructed following a fixed rule based on the ordered vertices, and in the example of Fig. 4 four vertices are involved and the triangles 102, 104 are constructed systematically to include the vertices 1, 2 and 3 for the first triangle, and vertices 1, 3 and 4 for the second triangle, as illustrated in Fig. 4(c). In case only three vertices are present, the only possible triangle is a triangle including vertices 1, 2 and 3, and in case five vertices are present, a fixed rule may be used to construct triangles including the vertices (1, 2, 3), (1, 3, 5) and (4, 5,1), and so on. This may be repeated up to 12 vertices.

A second test along the horizontal axis is performed by projecting the cube 100 and the TriSoup vertices horizontally on a 2D plane when looking from the left of Fig. 4(a) yielding the projection 116 illustrated in Fig. 4(b). When ordering the vertices following the clockwise order relative to the center of the projected node 100, the triangles 102, 104 include the vertices 1, 2 and 3 for the first triangle, and vertices 1, 3 and 4 for the second triangle, as illustrated in Fig. 4(b).

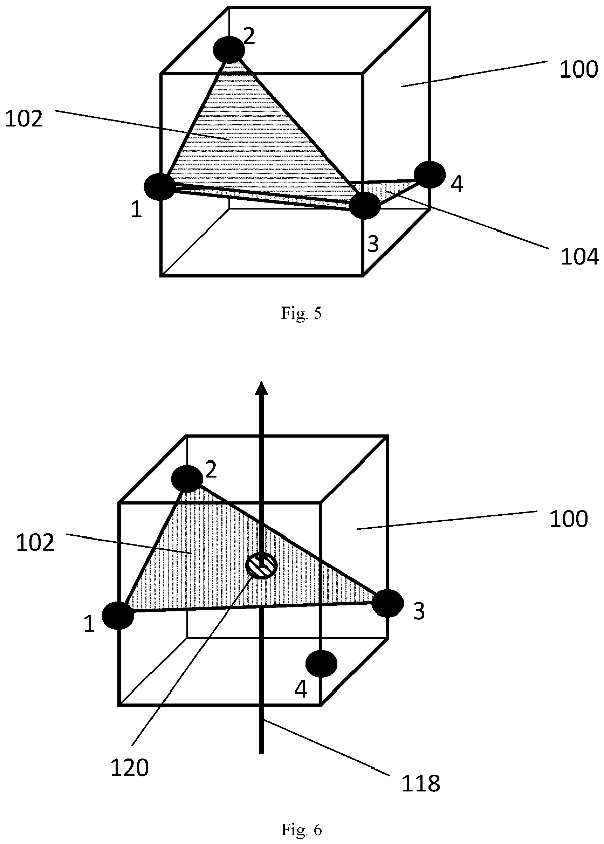

As may be seen from Fig. 4, the vertical projection (Fig. 4(c)) exhibits a 2D total surface of triangles that is the maximum so that the dominant axis is selected to be the vertical or z axis, and the TriSoup triangles to be constructed are obtained from the order of the vertical projection as illustrated in Fig. 4(c), which, in turn, yields triangles inside the volume as depicted in Fig. 2. It is noted that when considering the horizontal axis as the dominant axis, this leads to a different construction of the triangles within the volume 100 as depicted in Fig. 5 illustrating the volume 100 in which the triangles 102, 104 are constructed when assuming the dominant axis to be the horizontal axis and in order of the vertices as illustrated in Fig. 4(b).

The adequate selection of the dominant axis by maximizing the projected surface leads to a continuous reconstruction of the point cloud without holes.

The rendering of the TriSoup triangles is performed by ray tracing, and the set of all rendered points by ray tracing results in the decoded point cloud. Fig. 6 illustrates the ray tracing to render the TriSoup triangle 102 of Fig. 2 including the vertices 1, 2 and 3. Rays, like ray 118 in Fig. 6, are launched along directions parallel to an axis, like the z axis in Fig. 6. The origin of the rays is a point of integer, voxelized, coordinates of precision corresponding to the sampling position desired for the rendering. The intersection 120 of the ray 118 with triangle 102 is then voxelized, i.e., is rounded to the closest point at the desired sampling position, and is added to the list of rendered points. After applying the TriSoup coding scheme to all leaf nodes, i.e., after constructing the triangles and obtaining the intersections by ray tracing, copies of the same points in the list of all rendered points are discarded, i.e., only one voxel is kept among all voxels sharing the same 3D position, thereby obtaining a set of decoded, unique points.

When modeling a point cloud locally by applying the TriSoup coding scheme in a way as described above using a set of triangles for each leaf node or volume, also so-called TriSoup data is provided. The TriSoup data includes, for example, the information about the vertices of the respective triangles for a volume. However, in the prior art, compression of TriSoup data, is not efficient. For example, in the prior art, the compression of the vertex flag that indicates the presence of a TriSoup vertex on an edge of an occupied volume associated with a leaf node, makes use of an entropy coder, like a binary entropy coder, using one dedicated fixed context. The present invention is based on the finding that the compression of TriSoup data may be improved by improving the estimation of a probability of the vertex flag or presence flag to be true or false. More specifically, instead of compressing the vertex flag by using an entropy coder, like a binary entropy coder, with a dedicated fixed context as in the prior art, in accordance with the teachings of the present invention, improved contextual information is introduced which is used to select a context or entropy coder. This leads to an improved estimation of the probability which, in turn, yields a better compression of the vertex flag by the entropy coder. Thus, in accordance with the inventive approach, the compression efficiency of TriSoup data may be improved by obtaining contextual information correlated with the value of a vertex flag which allows for a better estimation of the probability of the flag to be true or false leading, in turn, to the improved compression of the flag by an entropy coder.

According to embodiments, the contextual information, CI, may be based on occupancy information of neighboring volumes that abut a current edge, and/or on vertex positional information of already-encoded/decoded neighboring edges. The vertex positional information may include a vertex flag and/or a vertex position on the already-coded/decoded edge.

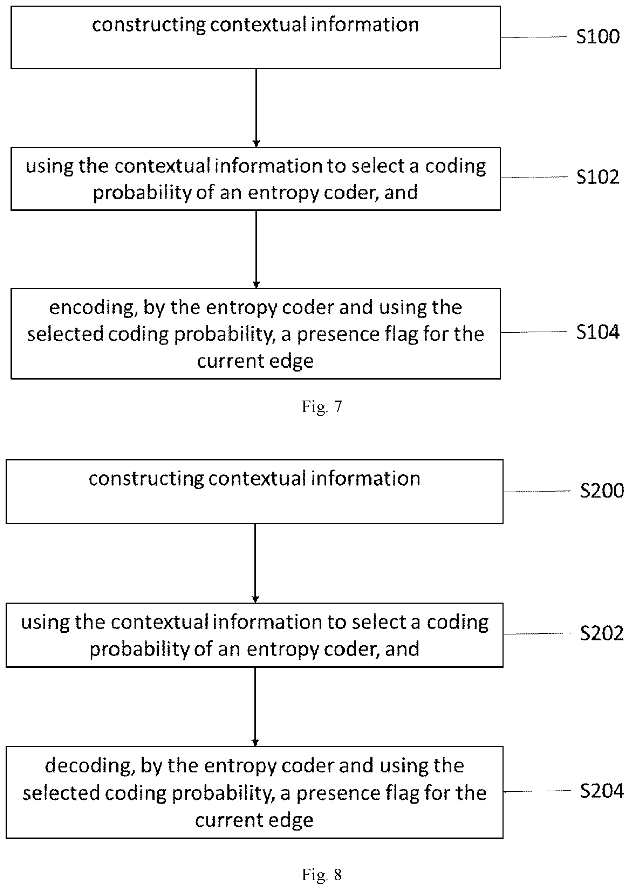

Fig. 7 illustrates a flow diagram of a method of encoding geometrical information of a geometry of a point cloud into a bitstream in accordance with embodiments of the present invention. The point cloud is represented by a plurality of cuboid volumes, and an occupied cuboid volume is modelled by one or more triangles, as illustrated, for example, in Fig. 2 and Fig. 3. At least one triangle has at least one respective vertex on an edge of the occupied cuboid volume. The geometrical information includes presence flags signaling a presence of a vertex. In accordance with embodiments, as depicted in Fig. 7, the method includes the following steps for a current edge of a cuboid volume:

S100: Constructing contextual information based on one or more or all of the following:

- occupancy information of neighboring cuboid volumes that abut the current edge,
- vertex positional information of already-coded neighboring edges of the current edge, the neighboring edges being edges having a point in common with the current edge.

S102: Using the contextual information to select a coding probability of an entropy coder.

S104: Encoding, by the entropy coder and using the selected coding probability, a presence flag for the current edge.

Fig. 8 illustrates a flow diagram of a method of decoding geometrical information of a geometry of a point cloud from a bitstream in accordance with embodiments of the present invention. The point cloud is represented by a plurality of cuboid volumes, and an occupied cuboid volume is modelled by one or more triangles. At least one triangle has at least one respective vertex on an edge of the occupied cuboid volume. The geometrical information includes presence flags signaling a presence of a vertex. In accordance with embodiments, as depicted in Fig. 8, the method includes the following steps for a current edge of a cuboid volume

S200: Constructing contextual information based on one or more or all of the following:

- occupancy information of neighboring cuboid volumes that abut the current edge,
- vertex positional information of already-decoded neighboring edges of the current edge, the neighboring edges being edges having a point in common with the current edge,

S202: Using the contextual information to select a coding probability of an entropy coder.

S204: Decoding, by the entropy coder and using the selected coding probability, a presence flag for the current edge.

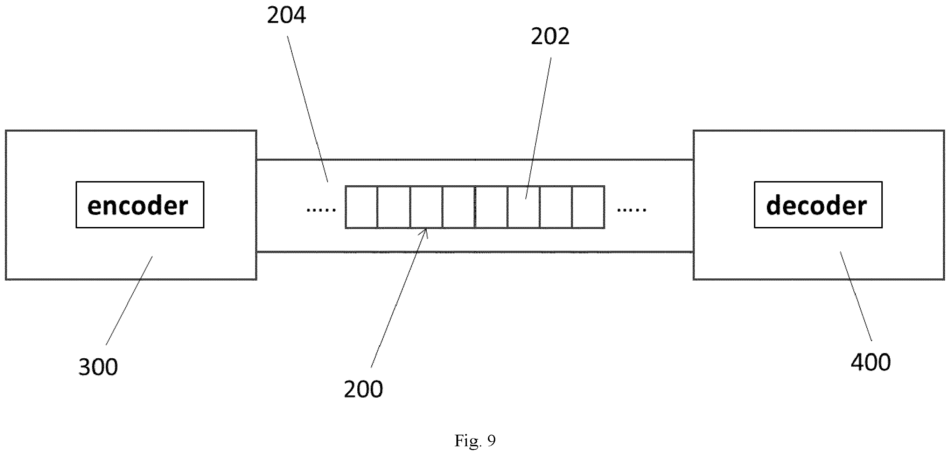

Fig. 9 illustrates a data stream 200 in accordance with embodiments of the present invention, which has encoded thereinto geometrical information of a geometry of a point cloud. The point cloud is represented by a plurality of cuboid volumes, and the part of the point cloud encompassed by an occupied cuboid volume is modelled by one or more triangles. At least one triangle has at least one respective vertex on an edge of the occupied cuboid volume. The geometrical information includes presence flags 202 signaling a presence of a vertex. For example, the data stream or bitstream 200 may be provided by an encoder 300 that performs the inventive method for encoding presence flags 202 into the data stream 200. The data stream 200 is transmitted to a decoder 400 via a wired or wireless transmission medium 204, like cable or a radio link, and the decoder 400 decodes from the data stream 200 the presence flags 202. Thus, in accordance with embodiments, as depicted in Fig. 9, the data stream 200 includes for a current edge a presence flag 202 for the current edge encoded into the data stream 200 by an entropy coder and using a coding probability. The coding probability is selected using contextual information, and the contextual information is constructed based on one or more or all of the following:

- occupancy information of neighboring cuboid volumes that abut the current edge,
- vertex positional information of already-encoded neighboring edges of the current edge, the neighboring edges being edges having a point in common with the current edge.

Embodiments of the present invention are now described in more detail. For the following description, edges belonging to at least one occupied volume are indexed by the index k. An occupied volume is a volume associated with an occupied leaf node of the tree representing the underlying geometry of the point cloud. The presence of a TriSoup vertex on an edge k is signaled by a vertex flag or presence flag $s_k$ that may be true (1) or that may be false (0). In accordance with embodiments of the present invention, for coding a vertex flag $s_k$, which is associated with a current edge k, an entropy coder or a context to be used by an entropy coder is selected based on contextual information, CI, that is constructed using one or more or all of the following:

- an occupancy of neighboring volumes which are associated with neighboring nodes of the tree
- one or more vertex flags $s_{k'}$ of neighboring already-coded edges k', and
- a vertex position $p_{k'}$ of one or more vertices $V_{k'}$ on neighboring already-coded edges k'.

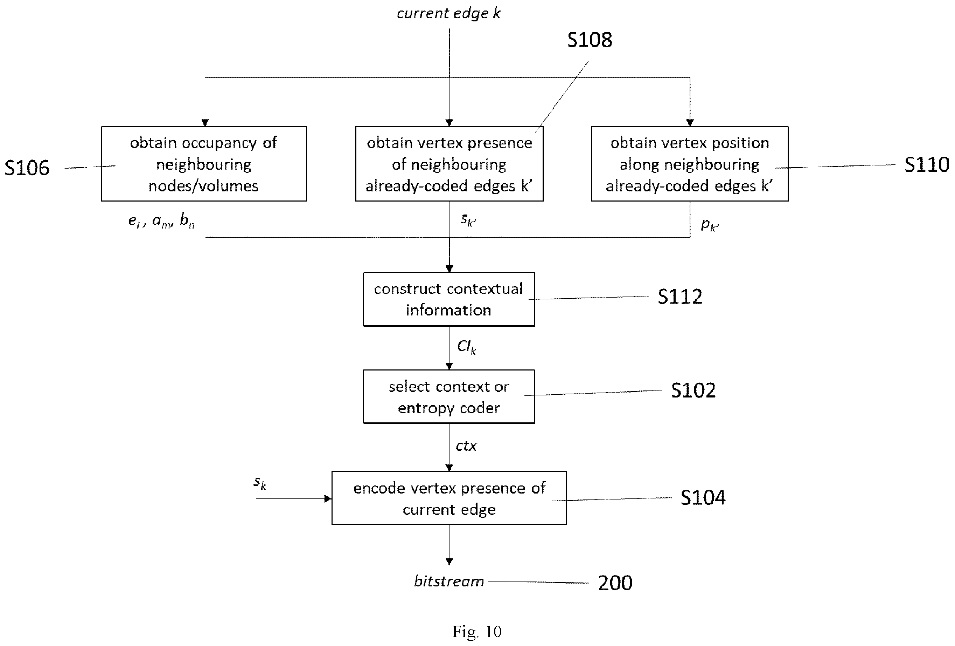

Fig. 10 illustrates a flow diagram of an encoding method in accordance with embodiments of the present invention. For a current edge k, at step S100, the occupancy of neighboring nodes/volumes $e_l$, $a_m$ and $b_n$ is obtained, as is indicated at step S106. The neighboring nodes/volumes include the volumes $e_l$, $a_m$ and $b_n$ that intersect the current edge k, as is described in more detail below. Further, at step S108, the vertex presence, like the vertex flags $s_{k'}$, of neighboring already-coded edges k' is obtained, and at step S110 the vertex position $p_{k'}$ of vertices along neighboring already-coded edges k' is obtained. Based on the information obtained in steps S106 to S110, at step S112 the contextual information, $CI_k$, is constructed. Embodiments for constructing the contextual information $CI_k$ are described in more detail below.

The contextual information $CI_k$ is used at step S102 to select the context or entropy coder so as to obtain a coding probability on the basis of the contextual information $CI_k$ for coding the vertex flag.

At step S104, vertex flag $s_k$ of the current edge k is received and encoded into the bitstream 200 by the entropy coder using the selected coding probability.

In accordance with embodiments, at step S102, the coding probability of the entropy coder used for encoding the vertex flag $s_k$ is selected, for example by applying a context-adaptive binary arithmetic coding, CABAC, mechanism, or by applying an optimum binary coder with update on the fly, OBUF, mechanism, as it is described, for example, in EP 3 633 857 A1, the contents of which is incorporated herein by reference.

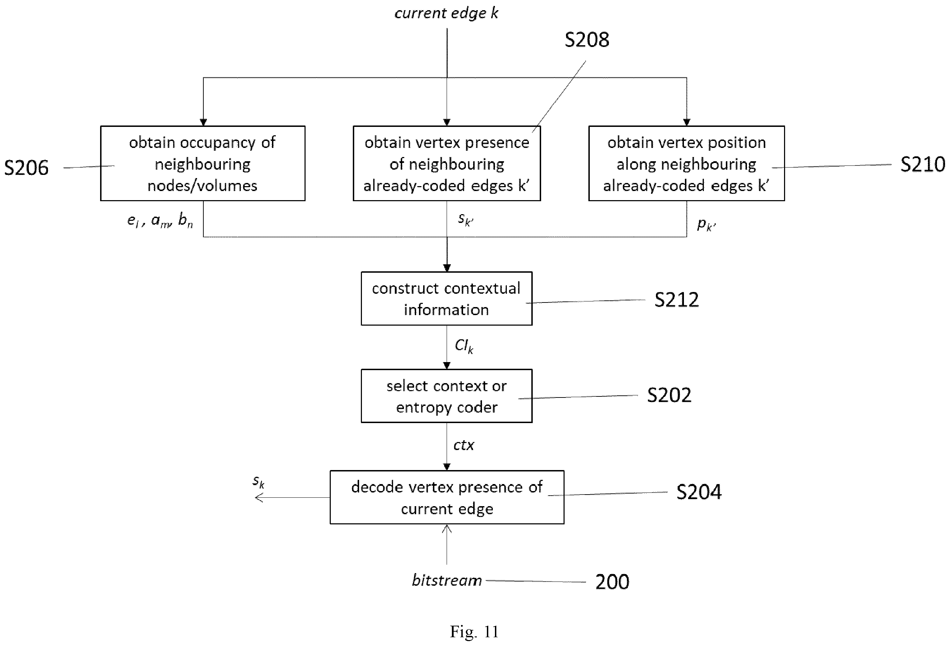

Fig. 11 illustrates a decoding method in accordance with embodiments of the present invention which, basically, is the same method as described above with reference to Fig. 10 except that the coder decodes the vertex flag $s_k$ from the bitstream 200 instead of encoding it into the bitstream. Fig. 11 illustrates steps S200 to S204 already described above with reference to Fig. 8, and for a current edge k, in the same way as described above with reference to Fig. 10, at steps S206 to S210 the information about the occupancy of neighboring volumes, the presence of vertices on neighboring already decoded edges, and the vertex positions along neighboring already-decoded edges are determined so as to construct the contextual information $CI_k$ at step S212. At step S202 the context or entropy coder is selected as described above also with reference to Fig. 10. From the bitstream 200, at step S204, the vertex presence or vertex flag of the current edge k is decoded and the vertex flag $s_k$ is output.

The above-described embodiments regarding the encoding/decoding of the vertex flag have been illustrated with reference to the processing for a current edge k, i.e., the above-described processes for encoding/decoding are repeated for all edges of the occupied volumes so as to obtain the respective information whether a vertex is present or not on a certain edge. The edges k are oriented from a start point to an end point, and in the following figures, an edge k that is currently processed, is represented as an arrow from start to end, i.e., the arrow head is the end of the edge k. In case a TriSoup vertex $V_k$ is present on an edge k, its position $p_k$ may be provided along the edge relative to the start position of the edge so that the position $p_k$ is a scalar information.

There are 12 neighboring volumes that intersect the current edge k, namely

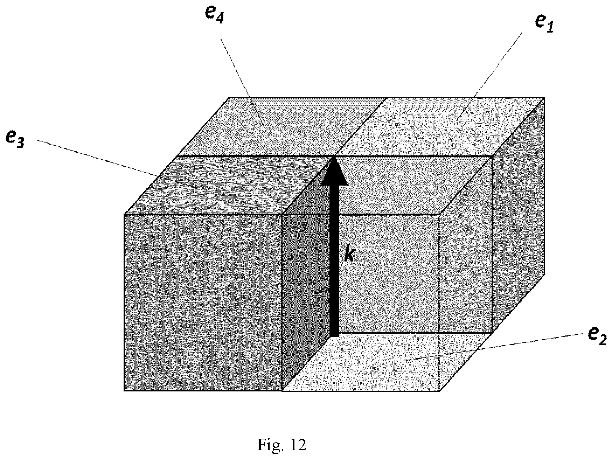

- 4 neighboring volumes $e_1$ to $e_4$ which share the current edge k, as is shown in Fig. 12 illustrating the four leaf nodes/volumes $e_1$ to $e_4$ sharing a current edge k illustrated by the arrow.
- 4 neighboring volumes $a_1$ to $a_4$ having one corner as a start point of the current edge k.
- 4 neighboring volumes $b_1$ to $b_4$ having one corner as the end point of the current edge k.

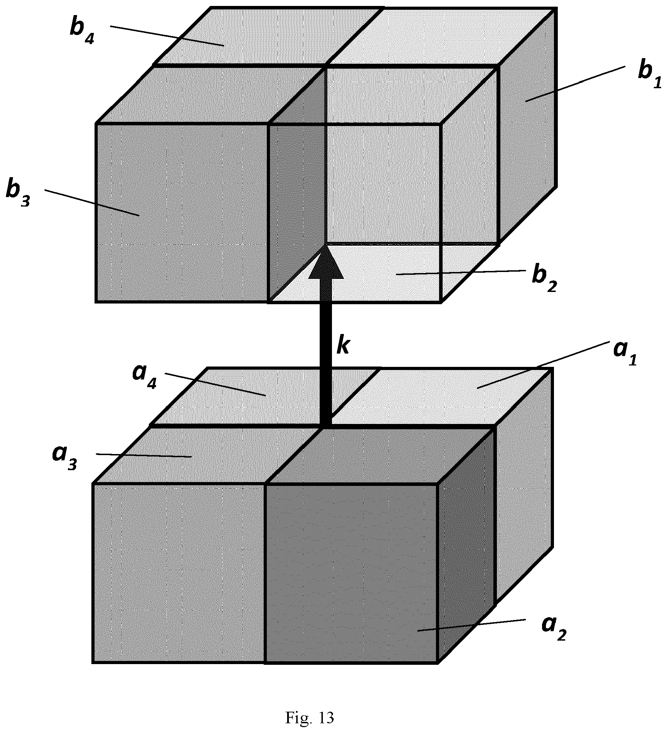

Fig. 13 illustrates the 8 leaf nodes/volumes $a_1$ to $a_4$ and $b_1$ to $b_4$, respectively, whose one corner is either the start point or the end point of the current edge k. The 12 occupancy bits associated with the 12 neighboring volumes $e_l$, $a_m$ and $b_n$ are used to construct the contextual information $CI_k(e_l, a_m, b_n)$. Embodiments for this construction are provided later.

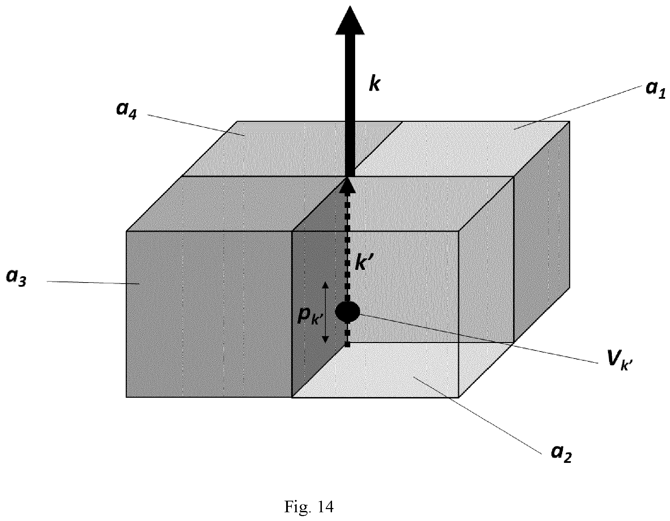

The vertex flags $s_k$ associated with edges k are coded in a predefined order that is also referred to as the TriSoup edge order. In accordance with embodiments, as described above, certain information, like presence flags $s_{k'}$ and vertex positions $p_{k'}$ from edges k' which have already been coded/decoded relative to the TriSoup edge order may be used to construct the contextual information $CI_k$ for coding a current vertex flag $s_k$ with k' < k. For example, when assuming that the three axes of the 3D space are labelled x, y, z, the TriSoup edge order may be a lexicographic order in the 6-dimensional representation of an edge $(x_{start}, y_{start}, z_{start}, x_{end}, y_{end}, z_{end})$ where $(x_{start}, y_{start}, z_{start})$ are coordinates of the start point of the edge, and $(x_{end}, y_{end}, z_{end})$ are coordinates of the end point. Using this order, the edge k' parallel to the current edge k and pointing to its start point is always already-coded/decoded, as is shown in Fig. 14 illustrating by the dashed arrow the unique edge k' that is parallel to the current edge k, illustrated by the arrow, and that points to the current edge's start point. A vertex $V_{k'}$ on the unique edge k' is illustrated so that, in the example of Fig. 14, for the unique edge k', the vertex flag $s_{k'}$ is true. Also, the position $p_{k'}$ of the vertex $V_{k'}$ of the unique edge k' is indicated and, as mentioned above, may be a scalar information measured from the start point of the unique edge k'.

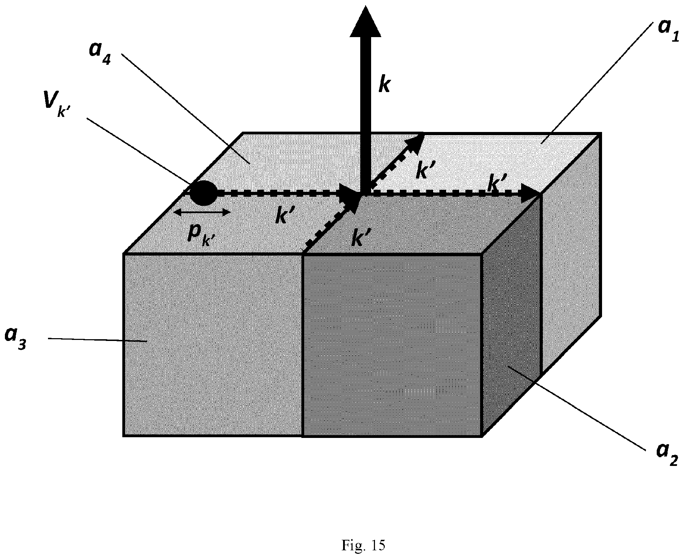

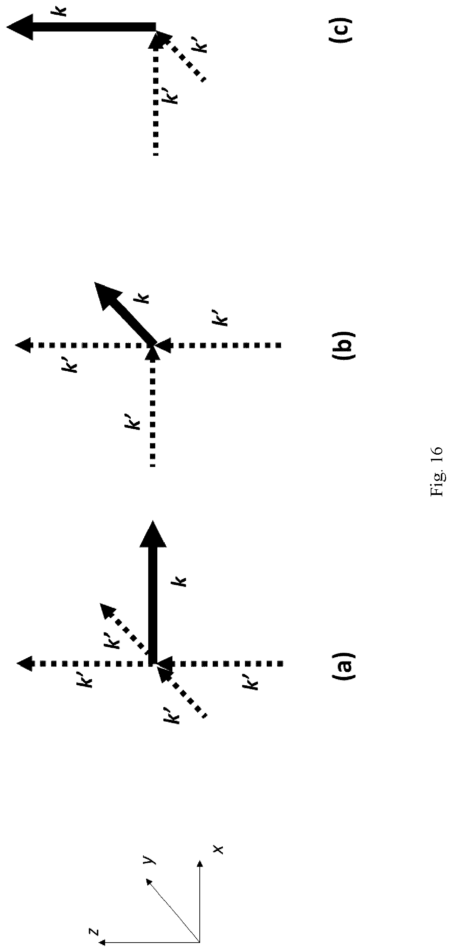

In addition, there are also 4 edges k' perpendicular to the current edge and pointing to or starting from the start point of the current edge k, as is shown in Fig. 15 illustrating by the dashed arrows the 4 perpendicular edges k', which are orthogonal to the current edge k, and which point to or start from the start point of the current edge. Given the TriSoup edge order, some or all of the 4 perpendicular edges k' in Fig. 15 are already-coded/decoded. The number $N_{perp}(k)$ of already-coded/decoded perpendicular edges k' depends on the direction of the current edge k as is illustrated in Fig. 16. When applying the above-mentioned lexicographic TriSoup edge order, the number of already-coded/decoded perpendicular edges is

- $N_{perp}(k)$ = 4 if the current edge k is parallel to the x axis, as is illustrated in Fig. 16(a)
- $N_{perp}(k)$ = 3 if the current edge k is parallel to the y axis, as is illustrated in Fig. 16(b)
- $N_{perp}(k)$ = 2 if the current edge k is parallel to the z axis, as is illustrated in Fig. 16(c).

For the $N_{perp}(k)$ already-coded/decoded perpendicular edges k', the vertex flags $s_{k'}$ and the vertex positions $p_{k'}$ of existing vertices $V_{k'}$ may be used to construct the contextual information $CI_k$ in accordance with embodiments of the present invention.

It is noted that none of the edges k' perpendicular to the current edge k and pointing to or starting from the end point of the current edge is already-coded/decoded so that these edges, naturally, may not be used to construct the contextual information $CI_k$.

Thus, in accordance with the above described embodiments, the contextual information, CI, may be constructed using one or more or all of the following:

- The occupancy status of the neighboring volumes, e.g., $CI_k(e_l, a_m, b_n)$.
- The presence of one or more vertices on already-coded/decoded edges, e.g., $CI_k(\{s_{k'} \mid k'<k\})$.
- The positions of the vertices, e.g., $CI_k(\{p_{k'} \mid k'<k\})$.

Embodiments for constructing the contextual information, $CI_k$, based on an occupancy of neighboring values are now described.

Construction of the contextual information $CI_k$ based the occupancy of neighboring volumes

It has been found that the occupancy information associated with the 12 neighboring volumes $e_l, a_m, b_n$ may be compacted to construct the contextual information $CI_k$ without significantly impacting the compression efficiency. Assuming Ne is the number of occupied volumes among the 4 volumes $e_l$ of which not all of the volumes are unoccupied (otherwise the current edge is not a TriSoup edge), the following inequalities hold:

$$1 \leq N_e \leq 4$$

Assuming Na is the number of occupied volumes among the 4 volumes $a_m$, and $N_b$ is the number of occupied volumes among the 4 volumes $b_n$ (see for example Fig. 13), the following inequalities hold:

$$0 \leq N_a \leq 4$$

and

$$0 \le N_b \le 4$$

It has been found that constructing the contextual information, $CI_k$, based on Ne, Na, $N_b$ instead of the 12 bits representing the occupancy, provides for a good compression performance. In accordance with embodiments, a part of the contextual information $CI_k$ may be the number

$$5*4*N_a + 4*N_b + (N_e - 1).$$

In accordance with further embodiments, it has been found that a maximum occupancy is a good predictor of the value of the vertex flag $s_k$ so that this part of the contextual information $CI_k$ may be further compacted into a 3-bit information as follows:

$$4*(1 \text{ if } N_a == 4 \text{ else } 0) + 2*(1 \text{ if } N_b == 4 \text{ else } 0) + (1 \text{ if } N_e == 4 \text{ else } 0).$$

In accordance with further embodiments, the above approaches may be combined, so that, for example, a part of the contextual information $CI_k$ may be the number

$$8*\max(0, N_a-1) + 2*\max(0, N_b-1) + (1 \text{ if } N_e == 4 \text{ else } 0).$$

Construction of the contextual information $CI_k$ based on already coded neighboring edges k'

*Number of neighboring vertices $V_{k'}$*

As described above, in accordance with embodiments, constructing the contextual information $CI_k$ may be based on already-coded/decoded neighboring edges k', for example on the basis of a number of neighboring vertices $V_{k'}$. There are at most 5 neighboring edges that are already-coded/decoded, namely the $N_{perp}(k)$ perpendicular edges described above with reference to Fig. 15, as well as the parallel or unique edge k' described above with reference to Fig. 14. Assuming TV(k) is the number of the already-coded/decoded edges k' on which a TriSoup vertex is present, i.e., having a vertex flag $s_{k'}$ that is true, and assuming NTV(k) is the number of edges k' on which no TriSoup vertex is present, the following equality holds:

$$N_{perp}(k) + 1 = TV(k) + NTV(k).$$

Thus, in accordance with embodiments, the contextual information $CI_k$ may be constructed based on the numbers TV(k) and NTV(k).
In accordance with further embodiments, it has been found that using the value of NTV(k) alone also provides sufficiently good compression results because TV(k) provides a weaker correlation with the position $p_k$ of the vertex $V_k$, so that, in accordance with such embodiments, the contextual information $CI_k$ may be constructed based on NTV(k) only.

*Relative positions of neighboring vertices*

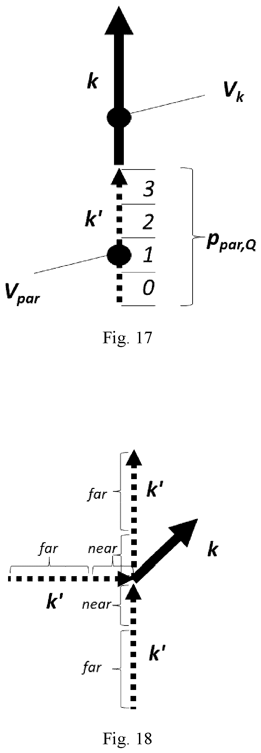

In accordance with yet further embodiments, the contextual information $CI_k$ may be constructed using the relative positions of neighboring vertices. When considering the unique edge k', which is parallel to the current edge k and pointing to its start point, as described above with reference to Fig. 14, a TriSoup vertex belonging to this edge may be denoted as $V_{par}$, as is shown in Fig. 17 illustrating, besides the already-coded/decoded TriSoup vertex $V_{par}$ on the unique edge k', also the quantized position $p_{par,Q}$ thereof. It has been found that the position $p_{par,Q}$ of the vertex $V_{par}$ along the already-coded/decoded edge k' is a good indicator of the vertex presence (the value of the vertex flag $s_k$) on the current edge k. The vertex position may be quantized into $p_{par,Q}$, as is illustrated in Fig. 17 into a two-bit value which may be used to construct the contextual information $CI_k$.
In accordance with further embodiments, it has been found that the position $p_{k'}$ of an already-coded TriSoup $V_{k'}$ on a perpendicular edge (see Fig. 15) is also a good indicator of the value of the vertex flag $s_k$. For example, as is shown in Fig. 18, the one or more positions $p_{k'}$ on the perpendicular edges k' may be reduced to a binary value indicating the vertex to be "near" to or "far" from the start point of the current edge k. As is illustrated in Fig. 18, the position $p_{k'}$ of a vertex $V_k$ on a perpendicular edge k' is indicated as a first position in case its distance from an end point of the edge k', which is the start point of the current edge k, is below a certain or predefined threshold. In Fig. 18, this first position is referred to as a position which is "near" to the current edge k. A position $p_{k'}$ of a vertex $V_{k'}$ being at a distance more than the threshold from the start point of the current edge k is referred to as a position "far" from the current edge k. The number $N_{near}$ of near vertices $V_{k'}$ is obtained and used to construct the contextual information $CI_k$. The following inequalities hold:

$$0 \leq N_{near} \leq 4.$$

In accordance with embodiments, the position $p_{par}$ of the vertex $V_{par}$ on the unique edge k' (see Fig. 17) may also be considered for counting near vertices, and in such an embodiment the following inequalities hold:

$$0 \leq N_{near} \leq 5.$$

In accordance with embodiments, the number of near vertices may be capped so as to obtain a 2-bit information referred to as $N_{near}'$ for which the following applies:

$$0 \leq N_{near}' = \min(3, N_{near}) \leq 3.$$

In accordance with embodiments, all information on the positions $p_{k'}$ for already-coded/decoded vertices $V_{k'}$ may be combined when constructing the contextual information $CI_k$. In accordance with embodiments, a part of the contextual information $CI_k$ may be

$$4* p_{par,Q} + N_{near}'.$$

In accordance with embodiments, the information about the relative positions of neighboring vertices may be combined with the occupancy information of neighboring volumes, and it has been found that, for example, a 6-bit contextual word

$$W = 16*(N_e - 1) + 4* p_{par,Q} + N_{near}'$$

is a very strong predictor of the value of the vertex flag $s_k$. In accordance with further embodiments, the word W may be enriched with any of the above-described contextual information, for example information like ($N_a$==4), (Nb==4) and NTV(k).

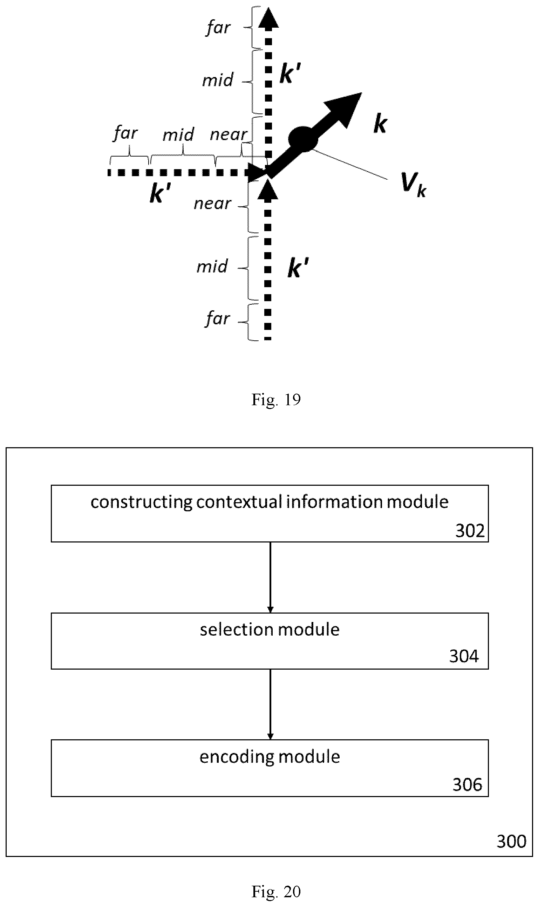

In accordance with yet further embodiments concerning the construction of the contextual information $CI_k$ based on the relative positions of the vertexes on neighboring edges, rather than reducing the positions $p_{k'}$ to a binary value, it may also be reduced to a ternary value indicating whether a position $p_{k'}$ on a perpendicular already-coded/decoded edge k' is within one of several intervals defined along the perpendicular edge k'. The intervals include, for example, three intervals indicating a far position, a mid position and a near position of the positon $p_{k'}$, as is illustrated in Fig. 19. The far interval starts at the start point of the edge k' and extends along a certain part of the length of the edge k'. The near interval ends at the end point of the edge k', which is the start point of the current edge k, and extends along a certain part of the length of the edge k'. The mid interval is the length of the edge k' between the near and far intervals. When considering the ternary values illustrated in Fig. 19, the following equality applies:

$$N_{near} + N_{mid} + N_{far} = TV(k) \leq 5.$$

The number of near/mid/far vertices may be capped such as to obtain 2-bit information $N_{near}'$, $N_{mid}'$ and $N_{far}'$.

$$0 \leq N_{near}' = \min(3, N_{near}) \leq 3$$

$$0 \leq \text{Nmid'} = \min(3, N_{\text{mid}}) \leq 3$$

$$0 \leq N_{\text{far}}' = \min(3, N_{\text{far}}) \leq 3.$$

In accordance with embodiments, the information on the positions $p_{k'}$ of an already-coded/decoded vertex $V_{k'}$ may be combined when constructing the contextual information $CI_k$. In accordance with embodiments, a part of the contextual information $CI_k$ may be

$$32*N_{\text{far}}' + 8*N_{\text{mid}}' + 2*N_{\text{near}}' + p_{\text{par},Q}\,.$$

In accordance with embodiments, when combining the above-described occupancy information regarding neighboring volumes and the ternary information about the relative position of the vertices on the neighboring edges, it has been found that the contextual word

$$W = 32*W_1 + W_2$$

with

$$W_1 = 32*N_{\text{far}}' + 8*N_{\text{mid}}' + 2*N_{\text{near}}' + p_{\text{par},Q}$$

$$W_2 = 8*\max(0, N_a\text{-}1) + 2*\max(0, N_b\text{-}1) + (N_e\text{==}4)$$

is a very strong predictor of the value of the vertex flag $s_k$.

So far, the inventive concept has been described with reference to embodiments concerning methods for encoding/decoding the geometrical information, namely the vertex flag into/from a bitstream. In accordance with further embodiments, the present invention also provides apparatuses for encoding/decoding geometrical information of a geometry of a point cloud into/from a bitstream.

Fig. 20 illustrates a block diagram of an apparatus for encoding the vertex flag $s_k$ in accordance with embodiments. The apparatus 300 includes the following modules:

A contextual information constructing module 302 for constructing contextual information for a current edge based on one or more or all of the following:

- occupancy information of neighboring cuboid volumes that abut the current edge,
- vertex positional information of already-coded neighboring edges of the current edge, the neighboring edges being edges having a point in common with the current edge.

A selection module 304 for selecting a coding probability of an entropy coder using the contextual information provided by the contextual information constructing module 302.

An encoding module 306 for encoding, by the entropy coder and using the selected coding probability, the presence or vertex flag $s_k$ for the current edge k.

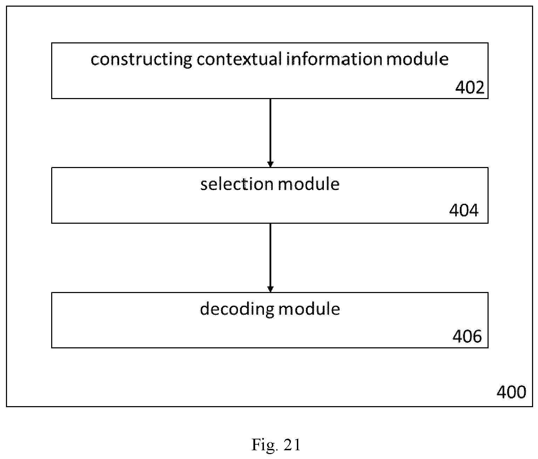

Fig. 21 illustrates a block diagram of an apparatus for decoding the vertex flag $s_k$ in accordance with embodiments of the present invention. The apparatus 400 includes the following modules:

A contextual information constructing module 402 for constructing contextual information for a current edge based on one or more or all of the following:

- occupancy information of neighboring cuboid volumes that abut the current edge,
- vertex positional information of already-decoded neighboring edges of the current edge, the neighboring edges being edges having a point in common with the current edge.

A selection module 404 for selecting a coding probability of an entropy coder using the contextual information provided by the contextual information constructing module 402.

A decoding module 406 for decoding, by the entropy coder and using the selected coding probability, the presence or vertex flag $s_k$ for the current edge k.

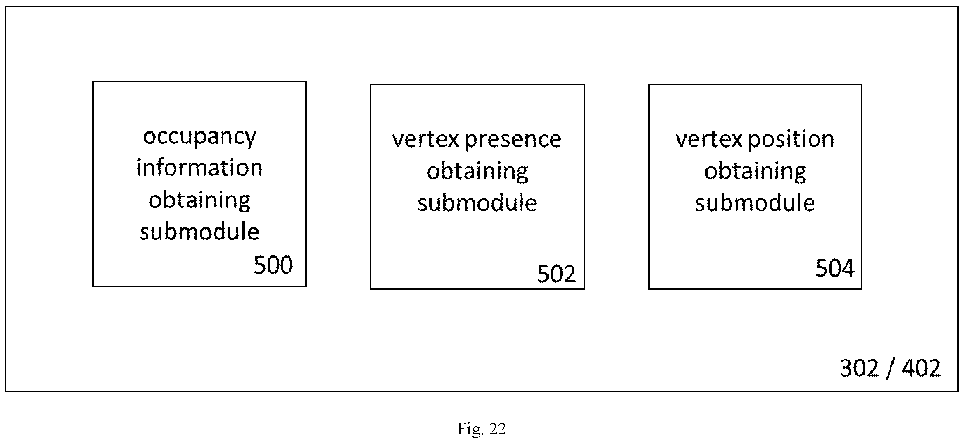

In accordance with embodiments, the contextual information constructing modules 302/402 described above with reference to Fig. 20 and Fig. 21 may include one or more submodules. Fig. 22 illustrates a block diagram of an embodiment for implementing the contextual information constructing module 302/402 as it may be used in the encoder of Fig. 20 or in the decoder of Fig. 21. The contextual information constructing module may comprise one or more of the following submodules

An occupancy information obtaining submodule 500 for obtaining occupancy information of the neighboring cuboid volumes $e_l$, $a_m$, $b_n$ that abut the current edge k.

A vertex presence obtaining submodule 502 for obtaining a vertex presence on already-coded/decoded neighboring edges k'.

A vertex position obtaining submodule 504 for obtaining a vertex position along already-coded/decoded neighboring edges k'.

The present invention further provides in embodiments an electronic device, a computer-readable storage medium and a computer program product.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

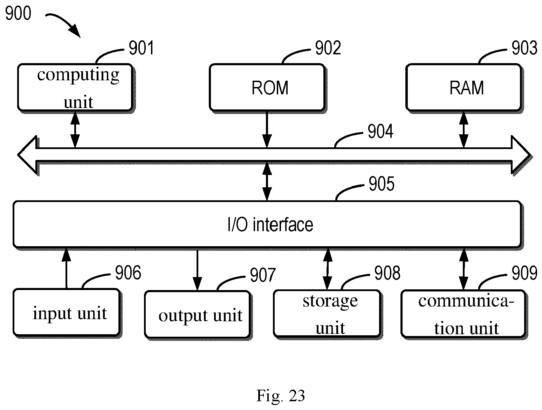

Fig. 23 is a block diagram illustrating an electronic device 900 according to embodiments of the present invention.

The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present invention described and/or claimed herein.

Referring to Fig. 23, the device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks.

The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present invention may be written in any combination of one or more programming languages. These program codes may be provided to a processor or controller of a general computer, a dedicated computer, or other programmable data processing device, such that the program codes, when executed by the processor or controller, cause the functions and/or operations specified in the flowcharts and/or block diagrams is performed. The program code can be executed entirely on the machine, partly on the machine, as a stand-alone software package partly on a machine and partly on a remote machine or entirely on a remote machine or server.

In the context of the present invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It should be understood that the steps may be reordered, added or deleted by using the various forms of flows shown above. For example, the steps described in the present invention may be executed in parallel, sequentially, or in different orders, as long as the desired results of the technical solutions in the present invention can be achieved, and no limitation is imposed herein.

The above-mentioned specific embodiments do not limit the scope of protection of the present invention. It should be understood by those skilled in the art that various modifications, combinations, sub-combinations and replacements may be made depending on design requirements and other factors. Any modifications, equivalent replacements, and improvements made within the principles of the present invention should be included within the protection scope of the present invention.

**Claims**

1. A method of encoding geometrical information of a geometry of a point cloud into a bitstream (200), the point cloud being represented by a plurality of cuboid volumes (100), an occupied cuboid volume (100) being modelled by one or more triangles (102-112), at least one triangle having at least one respective vertex ($V_k$) on an edge of the occupied cuboid volume (100), and the geometrical information comprising presence flags ($s_k$) signaling a presence of a vertex ($V_k$), the method comprising for a current edge (k):

   constructing (S100) contextual information ($CI_k$) based on one or more or all of the following:

      - occupancy information of neighboring cuboid volumes ($e_1$-$e_4$, $a_1$-$a_4$, $b_1$-$b_4$) that abut the current edge (k),
      - vertex positional information of already-coded neighboring edges (k') of the current edge (k), the neighboring edges (k') being edges having a point in common with the current edge (k),

using the contextual information ($CI_k$) to select (S102) a coding probability of an entropy coder, and
encoding (S104), by the entropy coder and using the selected coding probability, a presence flag ($s_k$) for the
current edge (k).

2.  A method of decoding geometrical information of a geometry of a point cloud from a bitstream (200), the point cloud
being represented by a plurality of cuboid volumes (100), an occupied cuboid volume (100) being modelled by one
or more triangles (102-112), at least one triangle having at least one respective vertex ($V_k$) on an edge of the occupied
cuboid volume (100), and the geometrical information comprising presence flags ($s_k$) signaling a presence of a
vertex ($V_k$) , the method comprising for a current edge (k):

constructing (S200) contextual information ($CI_k$) based on one or more or all of the following:

- occupancy information of neighboring cuboid volumes ($e_1$-$e_4$, $a_1$-$a_4$, $b_1$-$b_4$) that abut the current edge (k),
- vertex positional information of already-decoded neighboring edges (k') of the current edge (k), the neighboring edges (k') being edges having a point in common with the current edge (k),

using the contextual information ($CI_k$) to select (S202) a coding probability of an entropy coder, and
decoding (S204), by the entropy coder and using the selected coding probability, a presence flag ($s_k$) for the
current edge (k).

3.  The method of claim 1 or 2, wherein constructing the contextual information ($CI_k$) is based one or more or all of the
following:

- a count of all occupied neighboring cuboid volumes ($e_1$-$e_4$, $a_1$-$a_4$, $b_1$-$b_4$) belonging to a subset of neighboring
cuboid volumes,
- whether or not all neighboring cuboid volumes ($e_1$-$e_4$, $a_1$-$a_4$, $b_1$-$b_4$) belonging to a subset of neighboring cuboid
volumes are occupied,

wherein the subset of neighboring cuboid volumes ($e_1$-$e_4$, $a_1$-$a_4$, $b_1$-$b_4$) comprising one or more or all of the following:

- the neighboring cuboid volumes ($e_1$-$e_4$) sharing the current edge (k),
- the neighboring cuboid volumes ($a_1$-$a_4$) having a corner as a start point of the current edge (k),
- the neighboring cuboid volumes ($b_1$-$b_4$) having a corner as an end point of the current edge (k).

4.  The method of any one of the preceding claims, wherein constructing the contextual information ($CI_k$) is based on
one or more or all of the following:

- values of already-coded/decoded presence flags ($s_{k'}$) associated with the neighboring edges (k') of the current
edge (k),
- positions ($p_{k'}$) of vertices ($V_{k'}$) on the already-coded/decoded neighboring edges (k') of the current edge (k),
- a count ($N_{near}$) of vertices ($V_{k'}$) on already-coded/decoded neighboring edges (k') of the current edge (k) which
have a distance from the current edge (k) that is below a predefined threshold,
- a count ($N_{near}$, $N_{mid}$, $N_{far}$) of vertices ($V_{k'}$) on already-coded/decoded neighboring edges (k') of the current
edge (k) which have a distance from the current edge (k) that is within a predefined interval.

5.  The method of claim 4, wherein constructing the contextual information ($CI_k$) is based

- on a number (TV(k)) of neighboring edges (k') for which the already-coded/decoded presence flag ($s_{k'}$) is true,
and on a number (NTV(k)) of neighboring edges (k') for which the already-coded/decoded presence flag ($s_{k'}$)
is false, or
- only on the number (NTV(k)) of neighboring edges (k') for which the already-coded/decoded presence flag
($s_{k'}$) is false.

6.  The method of claim 4 or 5, wherein constructing the contextual information ($CI_k$) comprises quantizing the position
($p_{k'}$) of the vertices ($V_{k'}$) on the already-coded/decoded neighboring edges (k') to be coarser than an accuracy with
which the position ($p_{k'}$) of the vertices ($V_{k'}$) on the already-coded/decoded neighboring edges (k') are coded into the
bitstream (200).

7. The method of any one of the preceding claims, wherein, for selecting the coding probability of the entropy coder, the method uses

   - an optimal binary coder with update on the fly, OBUF, mechanism, or
   - a context-adaptive binary arithmetic coding, CABAC, mechanism.

8. The method of any one of the preceding claims, wherein the point cloud is modeled using the TriSoup coding scheme.

9. A non-transitory computer-readable storage medium comprising instructions which, when executed by a computer, cause the computer to carry out the method of any one of claims claim 1 to 8.

10. An apparatus (300) for encoding geometrical information of a geometry of a point cloud into a bitstream (200), the point cloud being represented by a plurality of cuboid volumes (100), an occupied cuboid volume (100) being modelled by one or more triangles (102-112), at least one triangle having at least one respective vertex ($V_k$) on an edge of the occupied cuboid volume (100), and the geometrical information comprising presence flags ($s_k$) signaling a presence of a vertex ($V_k$), the apparatus comprising:

   a contextual information ($CI_k$) constructing module (302) configured to construct contextual information ($CI_k$) for a current edge (k) based on one or more or all of the following:

   - occupancy information of neighboring cuboid volumes ($e_1$-$e_4$, $a_1$-$a_4$, $b_1$-$b_4$) that abut the current edge (k),
   - vertex positional information of already-coded neighboring edges (k') of the current edge (k), the neighboring edges (k') being edges having a point in common with the current edge (k),

   a selection module (304) configured to use the contextual information ($CI_k$) provided by the contextual information ($CI_k$) constructing module to select a coding probability of an entropy coder, and
   an encoding module (306) configured to encode, by the entropy coder and using the selected coding probability, a presence flag ($s_k$) for the current edge (k).

11. An apparatus (400) for decoding geometrical information of a geometry of a point cloud from a bitstream (200), the point cloud being represented by a plurality of cuboid volumes (100), an occupied cuboid volume (100) being modelled by one or more triangles (102-112), at least one triangle having at least one respective vertex ($V_k$) on an edge of the occupied cuboid volume (100), and the geometrical information comprising presence flags ($s_k$) signaling a presence of a vertex ($V_k$), the apparatus comprising:

   a contextual information ($CI_k$) constructing module (402) configured to construct contextual information ($CI_k$) for a current edge (k) based on one or more or all of the following:

   - occupancy information of neighboring cuboid volumes ($e_1$-$e_4$, $a_1$-$a_4$, $b_1$-$b_4$) that abut the current edge (k),
   - vertex positional information of already-decoded neighboring edges (k') of the current edge (k), the neighboring edges (k') being edges having a point in common with the current edge (k),

   a selection module (404) configured to use the contextual information ($CI_k$) provided by the contextual information ($CI_k$) constructing module to select a coding probability of an entropy coder, and
   a decoding module (406) configured to decode, by the entropy coder and using the selected coding probability, a presence flag ($s_k$) for the current edge (k).

12. The apparatus of claim 10 or 11, wherein the contextual information ($CI_k$) constructing module (302, 402) comprises one or more or all of the following submodules:

   - an occupancy information obtaining submodule (500) configured to obtain occupancy information of neighboring cuboid volumes ($e_1$-$e_4$, $a_1$-$a_4$, $b_1$-$b_4$) that abut the current edge (k),
   - a vertex presence obtaining submodule (502) configured to obtain a vertex presence on already-coded/decoded neighboring edges (k'),
   - a vertex position obtaining submodule (504) configured to obtain a vertex position along already-coded/decoded neighboring edges (k').

13. The apparatus of claim 12, wherein the vertex presence obtaining submodule (502) is configured to obtain values of already-coded/decoded presence flag ($s_{k'}$) associated with the neighboring edges ($k'$) of the current edge ($k$).

14. The apparatus of claim 12 or 13, wherein the vertex position obtaining submodule (504) is configured to obtain one or more or all of the following:

   - positions ($p_{k'}$) of vertices ($V_{k'}$) on the already-coded/decoded neighboring edges ($k'$) of the current edge ($k$),
   - a count ($N_{near}$) of vertices ($V_{k'}$) on already-coded/decoded neighboring edges ($k'$) of the current edge ($k$) which have a distance from the current edge ($k$) that is below a predefined threshold,
   - a count ($N_{near}$, $N_{mid}$, $N_{far}$) of vertices ($V_{k'}$) on already-coded/decoded neighboring edges ($k'$) of the current edge ($k$) which have a distance from the current edge ($k$) that is within a predefined interval.

15. A data stream (200) having encoded thereinto geometrical information of a geometry of a point cloud, the point cloud being represented by a plurality of cuboid volumes (100), an occupied cuboid volume (100) being modelled by one or more triangles (102-112), at least one triangle having at least one respective vertex ($V_k$) on an edge of the occupied cuboid volume (100), and the geometrical information comprising presence flags ($s_k$) signaling a presence of a vertex ($V_k$), the data stream (200) comprising for a current edge ($k$):

   a presence flag ($s_k$) for the current edge ($k$) encoded into the data stream (200) by an entropy coder and using a coding probability, the coding probability selected using contextual information ($CI_k$),
   wherein the contextual information ($CI_k$) is constructed based on one or more or all of the following:

   - occupancy information of neighboring cuboid volumes ($e_1$-$e_4$, $a_1$-$a_4$, $b_1$-$b_4$) that abut the current edge ($k$),
   - vertex positional information of already-encoded neighboring edges ($k'$) of the current edge ($k$), the neighboring edges ($k'$) being edges having a point in common with the current edge ($k$).

Fig. 1

Fig. 2

Fig. 3

Fig. 4

EP 4 258 213 A1

Fig. 5

Fig. 6

```
┌─────────────────────────────────────────────┐
│        constructing contextual information    │──── S100
└─────────────────────────────────────────────┘
                       │
                       ▼
┌─────────────────────────────────────────────┐
│  using the contextual information to select a coding  │──── S102
│       probability of an entropy coder, and    │
└─────────────────────────────────────────────┘
                       │
                       ▼
┌─────────────────────────────────────────────┐
│      encoding, by the entropy coder and using the     │
│   selected coding probability, a presence flag for the │──── S104
│                     current edge              │
└─────────────────────────────────────────────┘
```

Fig. 7

```
┌─────────────────────────────────────────────┐
│        constructing contextual information    │──── S200
└─────────────────────────────────────────────┘
                       │
                       ▼
┌─────────────────────────────────────────────┐
│  using the contextual information to select a coding  │──── S202
│       probability of an entropy coder, and    │
└─────────────────────────────────────────────┘
                       │
                       ▼
┌─────────────────────────────────────────────┐
│      decoding, by the entropy coder and using the     │
│   selected coding probability, a presence flag for the │──── S204
│                     current edge              │
└─────────────────────────────────────────────┘
```

Fig. 8

Fig. 9

*current edge k*

**S106** — obtain occupancy of neighbouring nodes/volumes → $e_l,\ a_m,\ b_n$

**S108** — obtain vertex presence of neighbouring already-coded edges k' → $s_{k'}$

**S110** — obtain vertex position along neighbouring already-coded edges k' → $p_{k'}$

**S112** — construct contextual information → $CI_k$

**S102** — select context or entropy coder → *ctx*

**S104** — encode vertex presence of current edge → *bitstream* — **200**

$s_k$

Fig. 10

current edge k

S208

S206 — obtain occupancy of neighbouring nodes/volumes

obtain vertex presence of neighbouring already-coded edges k'

obtain vertex position along neighbouring already-coded edges k' — S210

$e_l$, $a_m$, $b_n$        $s_{k'}$        $p_{k'}$

construct contextual information — S212

$CI_k$

select context or entropy coder — S202

ctx

$s_k$ ← decode vertex presence of current edge — S204

bitstream ——— 200

Fig. 11

EP 4 258 213 A1

Fig. 12

Fig. 13

Fig. 14

Fig. 15

Fig. 16

Fig. 17

Fig. 18

Fig. 19

Fig. 20

constructing contextual information module

402

selection module

404

decoding module

406

400

Fig. 21

| occupancy information obtaining submodule 500 | vertex presence obtaining submodule 502 | vertex position obtaining submodule 504 |

302 / 402

Fig. 22

Fig. 23

Europäisches Patentamt

European Patent Office

Office européen des brevets

## EUROPEAN SEARCH REPORT

Application Number

EP 22 16 7194

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LASSERRE (BLACKBERRY) S ET AL: "[PCC] An overview of OBUF and neighbour usage for geometry coding", 125. MPEG MEETING; 20190114 - 20190118; MARRAKECH; (MOTION PICTURE EXPERT GROUP OR ISO/IEC JTC1/SC29/WG11), , no. m45811 3 January 2019 (2019-01-03), XP030198272, Retrieved from the Internet: URL:http://phenix.int-evry.fr/mpeg/doc_end_user/documents/125_Marrakech/wg11/m45811-v1-m45811_AnoverviewofOBUFandneighbourusageforgeometrycoding.zip m45811_An overview of OBUF and neighbour usage for geometry coding.docx [retrieved on 2019-01-03] ----- | 1-15 | INV. G06T9/00 |
| T | LASSERRE (XIAOMI) S: "[GPCC][TriSoup] Part 6 Compression of vertex presence flag and vertex position", 138. MPEG MEETING; 20220425 - 20220429; ONLINE; (MOTION PICTURE EXPERT GROUP OR ISO/IEC JTC1/SC29/WG11), , no. m59293 12 April 2022 (2022-04-12), XP030301452, Retrieved from the Internet: URL:https://dms.mpeg.expert/doc_end_user/documents/138_OnLine/wg11/m59293-v1-m59293%5BGPCC%5D%5BTriSoup%5DPart6Compressionofvertexpresenceflagandvertexposition.zip m59293 [GPCC][TriSoup] Part 6 Compression of vertex presence flag and vertex position.pptx [retrieved on 2022-04-12] * the whole document * ----- -/-- | | TECHNICAL FIELDS SEARCHED (IPC) G06T |

The present search report has been drawn up for all claims

| Place of search | Date of completion of the search | Examiner |
|---|---|---|
| Berlin | 1 September 2022 | Raeymaekers, Peter |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

page 1 of 2

Europäisches
Patentamt

European
Patent Office

Office européen
des brevets

**EUROPEAN SEARCH REPORT**

Application Number

EP 22 16 7194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | "EE 13.50 on triangle soup", 138. MPEG MEETING; 20220425 – 20220429; ONLINE; (MOTION PICTURE EXPERT GROUP OR ISO/IEC JTC1/SC29/WG11), , no. n21576 26 May 2022 (2022-05-26), XP030302492, Retrieved from the Internet: URL:https://dms.mpeg.expert/doc_end_user/documents/138_OnLine/wg11/MDS21576_WG07_N00331.zip MDS21576_WG07_N0331.docx [retrieved on 2022-05-26] * page 1 * ----- | 1-15 | |
| A | "G-PCC codec description", 136. MPEG MEETING; 20211011 – 20211015; ONLINE; (MOTION PICTURE EXPERT GROUP OR ISO/IEC JTC1/SC29/WG11), , no. n20983 3 January 2022 (2022-01-03), XP030302435, Retrieved from the Internet: URL:https://dms.mpeg.expert/doc_end_user/documents/136_OnLine/wg11/MDS20983_WG07_N00215.zip N00215.docx [retrieved on 2022-01-03] * section 3.3.2, Entropy coding of vertices * ----- | 1-15 | |
| A | DRICOT ANTOINE ET AL: "Adaptive Multi-level Triangle Soup for Geometry-based Point Cloud Coding", 2019 IEEE 21ST INTERNATIONAL WORKSHOP ON MULTIMEDIA SIGNAL PROCESSING (MMSP), IEEE, 27 September 2019 (2019-09-27), pages 1-6, XP033660072, DOI: 10.1109/MMSP.2019.8901791 [retrieved on 2019-11-14] * the whole document * ----- | 1-15 | TECHNICAL FIELDS SEARCHED (IPC) |

The present search report has been drawn up for all claims

| Place of search | Date of completion of the search | Examiner |
|---|---|---|
| Berlin | 1 September 2022 | Raeymaekers, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3633857 A1